(19)

**Europäisches Patentamt**

**European Patent Office**

**Office européen des brevets**

(11) **EP 4 287 137 B1**

(12) **EUROPEAN PATENT SPECIFICATION**

(45) Date of publication and mention
of the grant of the patent:
**24.09.2025 Bulletin 2025/39**

(21) Application number: **23161034.6**

(22) Date of filing: **09.03.2023**

(51) International Patent Classification (IPC):
*G06V 10/143* (2022.01)     *G06V 10/44* (2022.01)
*G06V 10/54* (2022.01)     *G06V 10/56* (2022.01)
*G06V 10/60* (2022.01)     *G06V 10/80* (2022.01)
*G06V 10/86* (2022.01)     *G06V 20/56* (2022.01)
*G06V 20/64* (2022.01)

(52) Cooperative Patent Classification (CPC):
**G06V 20/588; G06V 10/143; G06V 10/449;
G06V 10/54; G06V 10/56; G06V 10/60;
G06V 10/806; G06V 10/811; G06V 10/814;
G06V 10/817; G06V 10/86; G06V 20/64;
Y02A 90/10**

(54) **METHOD, DEVICE, EQUIPMENT, STORAGE MEDIA AND SYSTEM FOR DETECTING DRIVABLE SPACE OF ROAD**

VERFAHREN, VORRICHTUNG, AUSRÜSTUNG, SPEICHERMEDIEN UND SYSTEM ZUR ERKENNUNG DES BEFAHRBAREN STRASSENRAUMS

PROCÉDÉ, DISPOSITIF, ÉQUIPEMENT, SUPPORT DE STOCKAGE ET SYSTÈME DE DÉTECTION D'ESPACES DE CIRCULATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.06.2022 CN 202210626448**

(43) Date of publication of application:
**06.12.2023 Bulletin 2023/49**

(73) Proprietors:
 • **Chongqing Vocational College of Transportation Jiangjin District Chongqing (CN)**
 • **Daojianyouxing (Chongqing) Technology Co. Ltd Chongqing (CN)**
 • **Chongqing Golden Queen New Energy Automobile Manufacturing Co., Ltd Chongqing (CN)**

(72) Inventors:
 • **Li, Xiaowei Jiangjin District, Chongqing (CN)**
 • **Zhang, Jinzheng Jiangjin District, Chongqing (CN)**

 • **Bin, Yang Jiangjin District, Chongqing (CN)**
 • **Jin, Ting an Jiangjin District, Chongqing (CN)**
 • **Zhou, Chunrong Jiangjin District, Chongqing (CN)**
 • **Cheng , Peng Jiangjin District, Chongqing (CN)**

(74) Representative: **Meyer, Thorsten Meyer Patentanwaltskanzlei Pfarrer-Schultes-Weg 14 89077 Ulm (DE)**

(56) References cited:
 **WO-A1-2011/160672     CN-A- 112 639 821**

 • **ALVAREZ JOSE M ET AL: "Combining Priors, Appearance, and Context for Road Detection", IEEE TRANSACTIONS ON INTELLIGENT TRANSPORTATION SYSTEMS, IEEE, PISCATAWAY, NJ, USA, vol. 15, no. 3, 1 June 2014 (2014-06-01), pages 1168 - 1178, XP011549667, ISSN: 1524-9050, [retrieved on 20140529], DOI: 10.1109/TITS.2013.2295427**

## Description

FIELD OF THE INVENTION

The application relates to the technical field of traffic, in particular to a method, a device, equipment, a storage media and a system for detecting drivable space of a road.

BACKGROUND OF THE INVENTION

A conventional method for detecting drivable space of a road generally includes single-sensor detection and multi-sensor fusion detection.

On the single-sensor detection, an onboard camera or a laser radar (LiDAR) are commonly used. However, there are some inevitable defects in the single-sensor detection. For example, it's not adaptive for the onboard cameras to complex weather changes and scene changes, thus the detection is easily disturbed by those changes to reduce the robustness stability. In addition, error is easily generated during the laser radar detection for the road edge, under the situation that the height difference between the road area and the non-road area is not obvious. WO2011160672A1 discloses a method for obtaining drivable road area for assisting a driver of a vehicle, comprising: obtaining a map model of the road; obtaining at least one image of the road; obtaining a projected model of the road by projecting the map model of the road; obtaining a probabilistic map of the image of the road; and obtaining drivable road area by applying a probabilistic analysis method to the projected model of the road and the probabilistic map of the image of the road. CN112639821A discloses a vehicle drivable area detection method, comprising obtaining, based on the first probability distribution of the obstacle and the second probability distribution of the obstacle, a drivable area of a vehicle represented by a probability, where the probability is a probability that the vehicle cannot drive through the area. Alvarez et. al. discusses road priors and contextual information for road detection.

On the multi-sensor fusion detection, an onboard camera and a laser radar are combined. Such fusion detection is depended on neural networks, and the calculation is more complex.

SUMMARY OF THE INVENTION

In view of the technical defects existing in the prior art, the purpose of the present invention is to provide a method, a device, equipment, a storage media and a system for detecting drivable space of a road.

To achieve the above purposes, as a first aspect, the present invention provides a method for detecting drivable space of a road, adapted for multi-sensor and multi-cue fusion road detection. The method includes:

   obtaining radar point cloud data by a laser radar, and processing the radar point cloud data to obtain a radar likelihood map;
   capturing a visible image by an onboard camera, and performing multi-cue processing on the visible image to obtain a visible light likelihood map;
   fusing the radar likelihood map with the visible light likelihood map to obtain a road fusion map; and
   identifying based on the road fusion map a detection result for drivable space.

The radar likelihood map is specifically obtained by:

   obtaining the radar point cloud data by the laser radar;
   performing point cloud preprocessing on the radar point cloud data to obtain first data, the point cloud preprocessing including an extraction for a road edge area and a segmentation for a ground plane;
   performing road point cloud detection on the first data to obtain second data, the road point cloud detection including a detection for a peak intensity and a window search;
   extracting lane edge point cloud data from the second data; and
   generating the radar likelihood map based on the lane edge point cloud data.

In one embodiment, the visible light likelihood map includes one or more from a likelihood map for road colors, a likelihood map for road textures, a likelihood map for horizontal lines, and a likelihood map for three-dimensional scenes;

   wherein, the likelihood map for road colors is obtained by processing the visible image with a color cue;
   the likelihood map for road textures is obtained by processing the visible image with a texture cue;
   the likelihood map for horizontal lines is obtained by processing the visible image with a horizontal line cue; and
   the likelihood map for three-dimensional scenes is obtained by processing the visible image with a three-dimensional scene layout cue.

In one embodiment, the likelihood map for road colors is specifically obtained by processing the visible image based on the color cue to obtain a shadowless image, establishing a reference histogram based on the shadowless image, and traversing a whole of the shadowless image with the reference histogram based on a Babler coefficient;

the likelihood map for road textures is specifically obtained by determining a maximum direction of a road edge texture in the visible image by a filter; and performing a soft voting on the visible image to locate a position of a vanishing point, and obtaining the likelihood map for road textures based on the maximum direction of the road edge texture and the position of the vanishing point;
the likelihood map for horizontal lines is specifically obtained by determining a horizontal line based on a horizontal coordinate of the vanishing point, and obtaining the likelihood map for horizontal lines based on the horizontal line;
the likelihood map for three-dimensional scenes is specifically obtained by dividing the visible image into three scenes, and obtaining the likelihood map for three-dimensional scenes based on a principle of superpixel.

In one embodiment, the road fusion map is specifically obtained by fusing the radar likelihood map with the visible light likelihood map based on a Bayesian fusion equation to obtain the road fusion map;
wherein the Bayesian fusion equation is as follows:

$$P(x \mid I) = \int P(x \mid L)P(L \mid I)dL \approx \sum_{i=1}^{M} w_i\, P(x \mid L_i);$$

$P(x \mid I)$ denotes a probability of input image I finding target location x, namely a posterior probability in Bayes; $P(x \mid L)$ denotes a probability of likelihood function L finding target location x, namely a prior probability in Bayes; $P(L \mid I)$ denotes a probability of constructing likelihood function L in the input image I, namely a likelihood probability in Bayes; $P(x \mid L_i)$ denotes the radar likelihood map and the visible light likelihood map, $w_i$ denotes a weight of each likelihood map, which is 1/M, and M denotes a total number of the likelihood map.

As a second aspect, the present invention provides a device for detecting drivable space of a road, adapted for multi-sensor and multi-cue road fusion detection, as defined in claim 5.

As a third aspect, the present invention provides computer equipment including a processor, an input device, an output device and a memory which are connected to each other by a bus, wherein the memory is configured to store a computer program including instructions, and the processor is configured to invoke the instructions to execute the method according to the first aspect.

As a fourth aspect, the present invention provides a computer-readable storage medium, comprising instructions which, when executed by a computer, cause the computer to carry out the method according to the first aspect.

As a fifth aspect, the present invention provides a system for detecting drivable space of a road, including a laser radar, an onboard camera and computer equipment which are in mutual communication, and the computer equipment is according to the third aspect.

In the method, device and system for detecting drivable space of a road according to the embodiments of the present invention, the radar point cloud data obtained from the laser radar is fused with the visible image obtain from the onboard camera, thus the accuracy of the road detection is improved, which solves the technical problems of road detection by a single sensor, such as inability to adapt to complex varied weathers and scenes, and mistakes. Furthermore, the calculation in the present method is simpler than the traditional fusion detection (neural network detection).

BRIEF DESCRIPTION OF THE DRAWINGS

The accompanying drawings facilitate an understanding of the various embodiments of this invention. In such drawings:

FIG. 1 is a flowchart of a method for detecting drivable space of a road according to one embodiment of the invention;
FIG. 2 is another flowchart of a method for detecting drivable space of a road according to one embodiment of the invention;
FIG. 3 is a flowchart of obtaining a radar likelihood map;
FIG. 4a is a radar point cloud data map obtained from laser radar.
FIG.4b is a two-dimensional (2D) image projected from the radar point cloud data map onto the onboard camera;
FIG. 5 illustrates an effect map of detection of peak intensity and window search;
FIG. 6 illustrates an effect map after extracting point cloud data of lane edges;

FIG. 7 is a radar likelihood map;

FIG. 8 illustrates a generated effect map of a likelihood map for road colors;

FIG. 9 illustrates the generated effect map of a likelihood map for road textures;

FIGs. 10a to 10c illustrate the generated effect maps of likelihood maps for horizontal lines;

FIGs. 11a to 11d illustrate the generated effect maps of likelihood maps for three-dimensional (3D) scenes;

FIG. 12 is a structure diagram of a system for detecting drivable space of a road according to one embodiment of the invention;

FIG. 13 is a structure diagram of the detection device in FIG. 12;

FIG. 14 is a structure diagram of computer equipment.

DETAILED DESCRIPTION OF ILLUSTRATED EMBODIMENTS

In order to make the purpose, technical solutions and advantages of the present application more clearly understood, the present application will be described in further detail below with reference to the accompanying drawings and embodiments. It should be understood that the specific embodiments described herein are only used to explain the present application, but not to limit the present application. It should be pointed out that for those skilled in the art, other modifications and improvements can be made without departing from the concept of the present application, which all belong to the protection scope of the present application.

It should be understood that, when used in this disclosure and the accompanying claims, the terms "include/including" and "comprise/comprising" indicate the existence of the features, whole, steps, operations, elements and/or components described, but do not preclude the existence or addition of one or more other features, whole, steps, operations, elements, components and/or collections thereof.

In the contemplation of the invention, by using laser radar detection which has high accuracy and is not susceptible to environmental factors such as light changes, 3D point cloud information detected by a laser radar is extracted and then projected onto a 2D image of a camera, so as to generate a radar likelihood map based on road characteristics; then a 2D roadway images is detected by a on-board camera, and a corresponding visible light likelihood map is generated based on different road characteristics (such as color, texture, horizontal line and 3D scene); finally, the radar likelihood map and visible light likelihood map are fused under Bayesian framework, thereby realizing the detection of the drivable space.

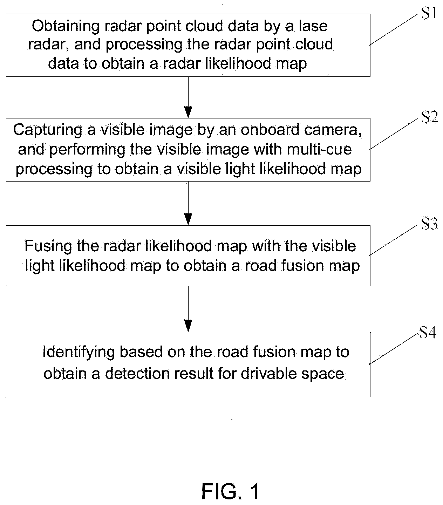

Based on the contemplation of the invention, the embodiment of the invention provides a method for detecting drivable space of a road, which is suitable for multi-sensor and multi-cue road fusion detection. Referring to FIGs. 1-2, the method include the following steps:

S1, obtaining radar point cloud data by a laser radar, and processing the radar point cloud data to obtain a radar likelihood map.

It should be noted that, the laser radar applies a kitti dataset in the present embodiment.

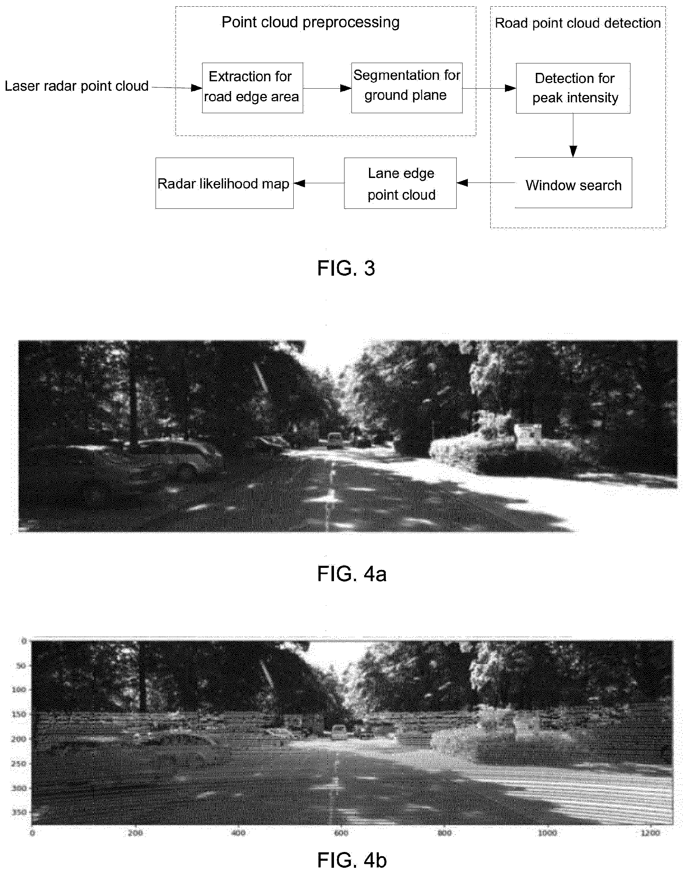

Referring to FIG. 3, the flowchart for obtaining the radar likelihood map includes the following steps.

Step (1), obtaining radar point cloud data as shown in FIG. 4a by the laser radar, and projecting the radar point cloud data onto a 2D image of the onboard camera, as illustrated in FIG. 4b; it is necessary to process the radar point cloud data with following steps (2)-(4) as the point cloud data for road edges detected by the laser radar should be extracted.

Step (2), performing the radar point cloud data with point cloud preprocessing to obtain first data. In this embodiment, the point cloud preprocessing includes an extraction for a road edge area and a segmentation for a ground plane. The purpose of the segmentation for ground plane is to filter the ground point cloud from the point cloud data using DBSCAN algorithm. It should be noted that, the DBSCAN algorithm may adopt conventional process, which is known to person skilled in the art in this field, and will not be repeated here.

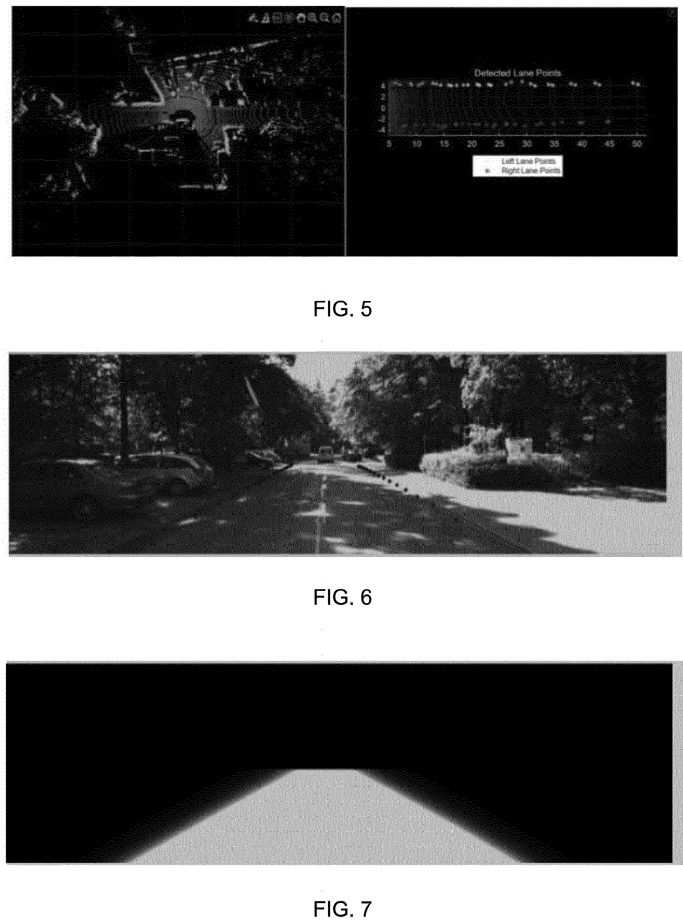

Step (3), performing the first data with road point cloud detection to obtain second data. In this embodiment, the road point cloud detection includes detection for peak intensity and a window search, as illustrated in FIG. 5. Specifically, the purpose of the detection for peak intensity is to filter lane edge points.

Step (4), extracting lane edge point cloud from the second data to obtain lane edge point cloud data, as illustrated in FIG. 6;

Step (5), generating a radar likelihood map based on the lane edge point cloud data, as illustrated in FIG. 7.

Specifically, radar likelihood map is generated by the laser radar according the flowing equation:

$\mathcal{L}_{\text{laser radar}}(x_i) = 1$, if $x_i$ is within a range of a road edge curve; $\mathcal{L}_{\text{lidar}}(x_i) = e^{\left(-d_{x_i}/25\right)}$, if $x_i$ is beyond the two road edges;

where $x_i$ denotes a position of the input image in the coordinate system of (u, v), $d_{x_i}$ denotes a distance from both sides of the road edge to the nearest road edge curve, and $\mathcal{L}_{lidar}$ denotes a likelihood map finally generated.

In such a way, the road edge point cloud detected by the laser radar is projected onto the 2D image, and the likelihood map corresponding to the laser radar is generated.

S2, capturing a visible image by an onboard camera, and performing the visible image with multi-cue processing to obtain a visible light likelihood map.

Specifically, the visible light likelihood map includes one or more of a likelihood map for road colors, a likelihood map for road textures, a likelihood map for horizontal lines, and a likelihood map for 3D scenes. More specifically, the likelihood map for road colors is obtained by processing the visible image with a color cue; the likelihood map for road textures is obtained by processing the visible image with a texture cue; the likelihood map for horizontal lines is obtained by processing the visible image with a horizontal line cue; and the likelihood map for 3D scenes is obtained by processing the visible image with a 3D scene layout cue.

By these tokens, multi-cue features for the road may be extracted from the visible images captured by the onboard camera, so that multiple visible light likelihood maps may be obtained accordingly. The multi-cue features for the road may include, but not limit to a color cue, a road texture cue, a horizontal line cue and a 3D scene cue.

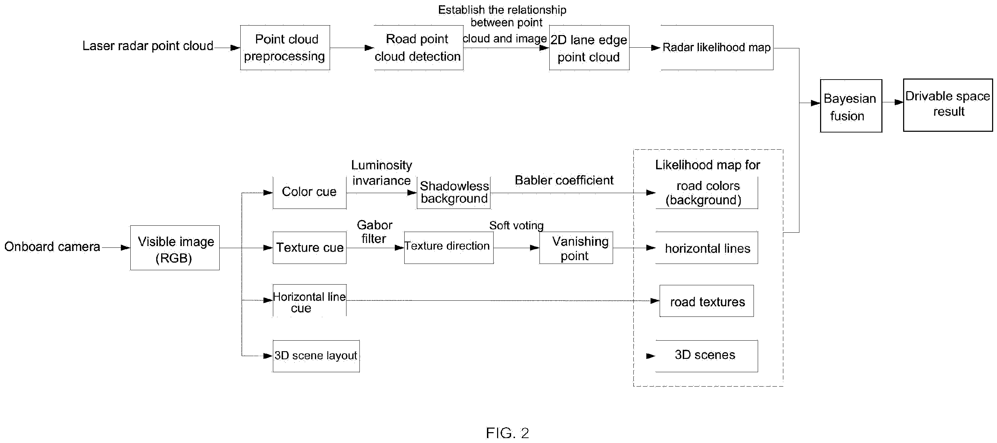

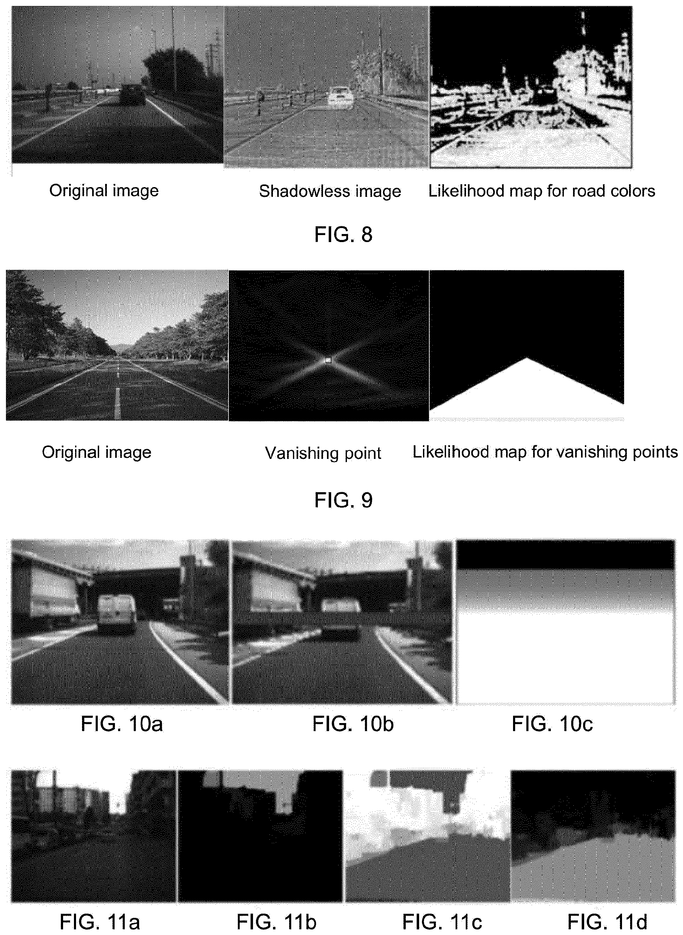

Referring to FIG. 2 and 8, the likelihood map for road colors is obtained by the following process.

The appearance color of the road may be varied with different acquisition conditions such as the changed weathers. Therefore, it's necessary to use luminosity invariance to improve the robustness to luminosity changes. The visible image obtained by the onboard camera is processed to obtain a shadowless image. Specifically, equations follow.

$$\mathcal{I}(x_i) = r(x_i)\cos\theta + b(x_i)\sin\theta \ ;$$

$$r(x_i) = \log\big(R(x_i)/G(x_i)\big), b(x_i) = \log\big(B(x_i)/G(x_i)\big).$$

In this embodiment, a shadowless image result $\mathcal{I}(x_i)$ is obtained by the first equation, where $x_i$ denotes a position of the input image, $r(x_i)$ denotes a logarithm expression of a value of the red divided by the green, in the i-th pixel of the input image, and , $b(x_i)$ denotes a logarithm expression of a value of the blue divided by the green, in the i-th pixel of the input image, log ( ) denotes logarithm calculation; $G(x_i)$ , $B(x_i)$ and $R(x_i)$ respectively denote the green, the blue and the red in the i-th pixel of the input image, and the $\theta$ is 37.5°.

In the shadowless image, a square of 7×7 in the drivable space is selected to establish a reference histogram, and the whole of the shadowless image is traversed by the reference histogram according to the Babbitt coefficient to establish a likelihood map for road colors as shown in FIG. 8.

Referring to FIG. 2 and 9, the likelihood map for road textures is obtained by the following process.

As shown in FIG. 9, it's important to determine a vanishing point in the original image as the vanishing point may provide useful information for determining the direction of the road. Specifically, Gabor filter is firstly used to determine the maximum direction of the road edge texture in the original image, and then vanishing points of candidate points are used for soft voting on the whole image to locate the vanishing point. Finally, based on the vanishing point and the texture direction, a likelihood map of road textures may be calculated, shown as the effect map of FIG. 9. In FIG. 9, the likelihood map for vanishing point is the aforementioned likelihood map for road textures.

Explanations for the calculation of the likelihood map for road textures follow.

During the image processing, Gabor function is a linear filter used for edge extraction. The maximum direction of road edge texture may be determined by the Gabor function, and then the location of vanishing point may be calculated by soft voting. That is, two lines (road edges) may be determined according to the Gabor function, and the location of vanishing point is obtained by using soft voting. The region between the two lines is set as 1, and the region beyond the two lines is set as 0, in such a way, a binary image, namely the likelihood map for road textures may be obtained.

Specifically, the calculation equation of the likelihood map for road textures is:

$$\mathcal{L}_{vp}(x_i) = 1, \text{if } x_i$$

is within the road boundary.

$$\mathcal{L}_{vp}(x_i) = 0, \qquad\qquad \text{otherwise} \qquad\qquad ,$$

where $\mathcal{L}_{vp}$ denotes a vanishing point, and $x_i$ denotes a position of the input image.

Referring to FIGs. 2, 10a-10c, the specific process of obtaining the aforementioned likelihood map for horizontal lines follows.

The vanishing point may be determined based on a texture cue, so that the position of the road located in the image may be inferred based on the horizontal coordinate of the vanishing point, that is, the horizontal line $h_t$ can be determined. The calculation equation of the likelihood map for horizontal lines is as follows:

$$\begin{cases} \mathcal{L}_h(\cdot, i) = 1, & \text{if } i \le h_t \\ \mathcal{L}_h(\cdot, i) = 0.98^{h_t - i}, & \text{otherwise} \end{cases}.$$

That is, for determining the horizontal line ht, it's necessary to set the value for the visible image according to the above equations. If Row i is smaller than ht, select the first equation to set the value as 1, otherwise, select the second equation to set the value as 1, and finally obtain a binary image as shown in FIG.10c.

Referring to FIG. 2, 11a to 11d, the specific process of obtaining the aforementioned likelihood map for 3D scenes follows.

The image is divided into three scenes $P_g$, $P_v$, $P_s$ (referring to the ground, the vertical surface and the sky, respectively), and the road is limited to the region of the ground. By using the principle of superpixel, each pixel in the image is divided into three pixel values. The equation for calculating the 3D scene layout is:

$$\begin{cases} \mathcal{L}_{3D}(x_i) = P_g(x_i), & \text{if } P_g(x_i) \ge \max\big(P_v(x_i), P_s(x_i)\big) \\ \mathcal{L}_{3D}(x_i) = 0, & \text{otherwise} \end{cases},$$

**where** $x_i$ denotes a position of an input image, $\mathcal{L}_{3D}$ denotes an expression of a likelihood map, and 3D denotes three 3D labels.

In this embodiment, the road is limited to the region of the ground, thus, if the probability of $P_g$ is greater than the maximum (max) of $P_v$ and $P_s$ (the vertical surface and the sky), select the first equation, otherwise select the second equation.

That is, the visible image is divided into the ground, the vertical surface and the sky, respectively, which are to be set with values according the above manner, and finally, a binary image as shown in FIG.11d may be obtained.

S3, fusing the radar likelihood map with the visible light likelihood map to obtain a road fusion map.

Specifically, the radar likelihood map is fused with the visible light likelihood map based on a Bayesian fusion equation to obtain the road fusion map.

The Bayesian fusion equation is as follows:

$$P(x \mid I) = \int P(x \mid L)P(L \mid I)dL \approx \sum_{i=1}^{M} w_i P(x \mid L_i);$$

where $P(x \mid I)$ denotes a probability of input image I finding target location x, namely a posterior probability in Bayes; $P(x \mid L)$ denotes a probability of likelihood function L finding target location x, namely a prior probability in Bayes; $P(L \mid I)$ denotes a probability of constructing likelihood function L in the input image I, namely a likelihood probability in Bayes; $P(x \mid L_i)$ denotes the radar likelihood map and the visible light likelihood map, $w_i$ denotes a weight of each likelihood map, which is 1/M, and M denotes a total number of the likelihood map

S4, identifying based on the road fusion map to obtain a detection result for drivable space.

Specifically, since the road fusion map obtained is a probability, the threshold value is set as 0.5. When the fusion result is greater than 0.5, the result value is set as 1; when the fusion result is less than 0.5, the result value is set as 0. For example, when the obtained road fusion map is a binary image, the part of the image with probability greater than 0.5 is set with white, and the part of the image with probability smaller than 0.5 is set with black. In this way, the road area in the figure is white, and the non-road area is black, thereby obtaining the detection result for drivable space.

It should be noted that, in this embodiment, the visible light likelihood maps obtained from the visible light image include but are not limited to the four types mentioned above. When the visible light likelihood map and radar likelihood map are fused, multiple combinations may be included. For example, Embodiment 1: fusion of any one visible light likelihood map with the radar likelihood map; Embodiment 2: fusion of any two visible light likelihood maps with the radar likelihood map; Embodiment 3: fusion of any three visible light likelihood maps with the radar likelihood map; Embodiment 4: fusion of any four visible light likelihood maps with the radar likelihood map. A specific fusion way between the visible light likelihood map and light likelihood map may be selected according to the actual demands.

In conclusion, the method for detecting drivable space of a road according to the embodiment of the invention has the following beneficial effects.

The road fusion detection is based on multiple sensors and multiple cues, thus the detection is effective and accurate.

The cue features of the road such as color and texture can be extracted from the image of the road according to illumination invariance to generate corresponding likelihood maps, which can be fused with the radar likelihood map obtained from the radar point cloud data, thus the detection method is widely adaptive to different luminosity and different weather conditions, different types of roads with different environments.

The detection method solves the technical problems of road detection by a single sensor, such as inability to adapt to complex varied weathers and scenes, and mistakes.

The calculation in the present method is simpler than the traditional fusion detection (neural network detection).

The present detection may be deployed in the driverless vehicle to detect the drivable space of the driverless vehicle.

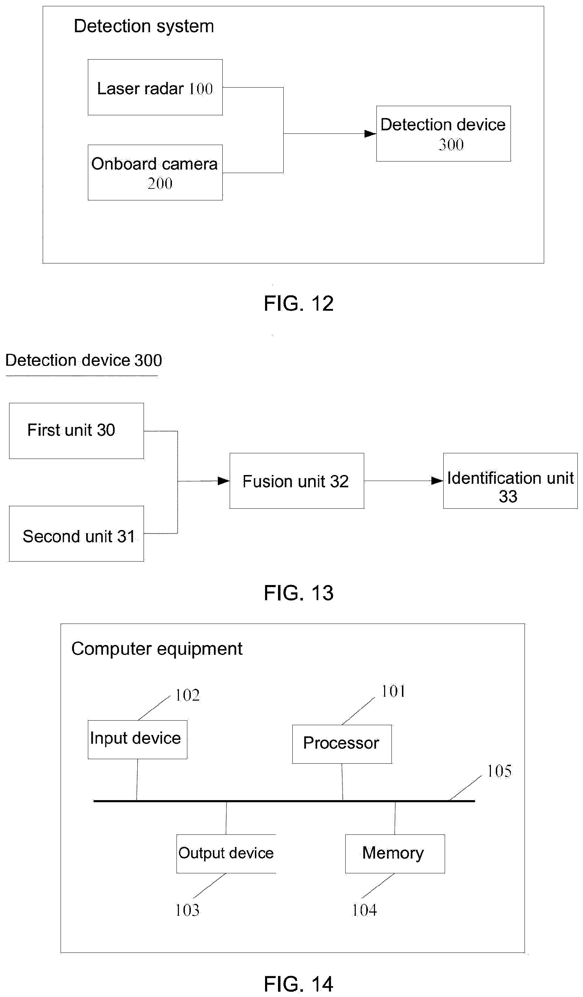

Referring to FIG. 12, a system for detecting a lane drivable space according to the present invention includes a laser radar 100, an onboard camera 200 and a detection device 300 which are in mutual communication.

As shown in FIG. 13, the detection device 300 includes:

a first unit 30, configured for obtaining radar point cloud data by a laser radar, and processing the radar point cloud data to obtain a radar likelihood map;

a second unit 31, configured for capturing a visible image by an onboard camera, and performing the visible image with multi-cue processing to obtain a visible light likelihood map;

a fusion unit 32, configured for fusing the radar likelihood map with the visible light likelihood map to obtain a road fusion map; and

an identification unit 33, configured for identifying based on the road fusion map to obtain a detect result for drivable space.

Specifically, in the present embodiment, the first unit 30 is specifically configured for:

obtaining the radar point cloud data by the laser radar;

performing the radar point cloud data with point cloud preprocessing to obtain first data, the point cloud preprocessing including an extraction for a road edge area and a segmentation for a ground plane;

performing the first data with road point cloud detection to obtain second data, the road point cloud detection including a detection for peak intensity and a window search;

extracting lane edge point cloud data from the second data; and

generating the radar likelihood map based on the lane edge point cloud data.

Specifically, the visible light likelihood map includes one or more from a likelihood map for road colors, a likelihood map for road textures, a likelihood map for horizontal lines, and a likelihood map for 3D scenes.

Specifically, the likelihood map for road colors is obtained by processing the visible image with a color cue;

the likelihood map for road textures is obtained by processing the visible image with a texture cue;

the likelihood map for horizontal lines is obtained by processing the visible image with a horizontal line cue; and

the likelihood map for 3D scenes is obtained by processing the visible image with a 3D scene layout cue.

Furthermore, the second unit 31 is configured to obtain the likelihood map for road colors by:

processing the visible image based on a color cue to obtain a shadowless image, establishing a reference histogram based on the shadowless image, and traversing a whole of the shadowless image with the reference histogram based on a Babler coefficient.

Furthermore, the second unit 31 is configured to obtain the likelihood map for road textures by:

determining a maximum direction of a road edge texture in the visible image by a filter, performing the visible image with a soft voting to locate a position of a vanishing point, and obtaining the likelihood map for road textures based on the maximum direction of the road edge texture and the position of the vanishing point.

Furthermore, the second unit 31 is configured to obtain the likelihood map for horizontal lines by:

determining a horizontal line based on a horizontal coordinate of the vanishing point, and obtaining the likelihood map for horizontal lines based on the horizontal line.

Furthermore, the second unit 31 is configured to obtain the likelihood map for 3D scenes by:

dividing the visible image into three scenes, and obtaining the likelihood map for 3D scenes based on a principle of superpixel.

Specifically, the fusion unit 32 is configured to fuse the radar likelihood map with the visible light likelihood map based on a Bayesian fusion equation to obtain the road fusion map;

wherein the Bayesian fusion equation is as follows:

$$P(x \mid I) = \int P(x \mid L)P(L \mid I)dL \approx \sum_{i=1}^{M} w_i \, P(x \mid L_i);$$

where $P(x \mid L_i)$ denotes the radar likelihood map and the visible light likelihood map, $w_i$ denotes a weight of each likelihood map, which is 1/M, and M denotes a total number of the likelihood map.

In some embodiments of the present invention, the detection device may be computer equipment. As shown in FIG. 14, the computer equipment may include one or more processors 101, one or more input devices 102, one or more output device 103 and a memory 104 which are connected to each other by a bus 105. The memory 104 is configured to store one or more computer programs including instructions, and the one or more processors 101 are configured to invoke the instructions to execute the method mentioned above.

It should be understood that in embodiments of the invention, the processor 101 may be a central processing unit (CPU), which may also be any other general-purpose processor, digital signal processor (DSP), application specific integrated circuit (ASIC), off-the-shelf field-programmable gate array (FPGA) or other programmable logic devices, discrete gates or transistor logic devices, discrete hardware components, etc.. A general-purpose processor may be a microprocessor or any conventional processor, etc..

The input device 102 may include a keyboard, and the output device 103 may include a display (LCD, etc.) and a speaker, etc..

The memory 104 may include read-only memory and random access memory and provide instructions and data to the processor 101. Part of memory 104 may also include non-volatile random access memory. For example, the memory 104 may also store information of device type.

In the concrete implementation, the processor 101, the input device 102 and the output device 103 described in the embodiment of the invention may execute the realization mode described in the embodiment of the method for detecting drivable space of a road, which will not be repeated here.

It should be noted that, the specific work flow of the system, the device and the computer equipment of detecting drivable space of a road, may be referred to the above embodiments of the method, which will not be repeated here.

Accordingly, corresponding to the above-mentioned method and the computer equipment shown in FIG. 14, the embodiments of the invention further provide a computer-readable storage medium in which a computer program including instructions is stored, and the instructions are executed by a processor to implement the method for detecting drivable space of a road.

The computer-readable storage medium may be an internal storage unit of the system described in any of the aforementioned embodiments, such as a hard disk or a memory of the system. The computer-readable storage medium may also be an external storage device of the system, such as a plug-in hard disk, a smart media card (SMC), a secure digital (SD) card, a flash card, etc., equipped with the system. Further, the computer-readable storage medium may also include both an internal storage unit of the system and an external storage device. The computer-readable storage medium is configured to store the computer programs and other programs and data required by the system. The computer-readable storage medium may also be configured to temporarily store data that has been or will be output.

The persons ordinarily skilled in the art may realize that, the units and algorithmic steps of each embodiment described in combination with the embodiments disclosed herein may be implemented in electronic hardware, computer software, or a combination of both. In order to clearly illustrate the interchangeability of hardware and software, the composition and steps of each example have been described generally in terms of function in the above description. Whether these functions are performed in hardware or software depends on the specific application and constraints of the technical solution. Persons ordinarily skilled in the art may use different methods to achieve the described functions for each particular application, but such implementation should not be considered beyond the scope of the invention.

In the several embodiments provided in this application, it should be understood that the devices and methods disclosed may be implemented by other manners. For example, the device embodiments described above are just exemplary, the division of the unit is only for a logical function, and other division ways may be applied in actual implementation. For example, multiple units or components may be combined or integrated into another system; optionally, some features may be ignored or not implemented. In addition, the coupling or direct coupling or communication connections between each other shown or discussed may be indirect coupling or communication connections through interfaces, devices or units, or may be electrical, mechanical or other forms of connections.

The units described as separate parts may or may not be physically separate, and the components displayed as units may or may not be physical units, that is, the components may be located in one place or distributed across multiple network units. Part or all of the units may be selected according to the actual demands to realize the purpose of the embodiments of the invention.

In addition, each functional unit in each embodiment of the invention may be integrated in a processing unit, or exist physically separately, or two or more units may be integrated in a unit. The above integrated units may be realized either in the form of hardware or software functional units.

The integrated units may be stored in a computer-readable storage medium if implemented in the form of a software functional unit and marketed or used as an independent product. Based on this understanding, the essence of the technical solution of the invention or the solution part contributed to the existing technology, part or all of the technical solution may be manifested in the form of a software product stored in a storage medium, several instructions are included to make computer equipment (such as a personal computer, a server, or network equipment, etc.) perform all or part of the method steps described in each embodiment of the invention. The aforementioned storage media may include a USB disk, a portable hard disk, a read-only memory (ROM), a random access memory (RAM), a magnetic disk or a compact disc (CD) and other media that can store program codes.

The above-mentioned embodiments only denote several embodiments of the present application, and the descriptions thereof are relatively specific and detailed, but should not be construed as limiting the scope of the patent application. It should be pointed out that for those skilled in the art, several modifications and improvements can be made without departing from the concept of the present application, which all belong to the protection scope of the present application. Therefore, the scope of protection of the patent of the present application shall be subject to the appended claims.

## Claims

1. A method for detecting drivable space of a road, adapted for multi-sensor and multi-cue fusion road detection, and the method comprising:

   obtaining radar point cloud data by a laser radar, and processing the radar point cloud data to obtain a radar likelihood map;
   capturing a visible image by an onboard camera, and performing multi-cue processing on the visible image to obtain a visible light likelihood map;
   fusing the radar likelihood map with the visible light likelihood map to obtain a road fusion map; and
   identifying based on the road fusion map a detection result for drivable space;
   **characterized in that**, the radar likelihood map is specifically obtained by:

   obtaining the radar point cloud data by the laser radar;
   performing point cloud preprocessing on the radar point cloud data with to obtain first data, the point cloud preprocessing comprising an extraction for a road edge area and a segmentation for a ground plane;
   performing road point cloud detection on the first data to obtain second data, the road point cloud detection comprising a detection for a peak intensity and a window search;
   extracting lane edge point cloud data from the second data; and
   generating the radar likelihood map based on the lane edge point cloud data.

2. The method according to claim 1, wherein the visible light likelihood map comprises one or more from a likelihood map for road colors, a likelihood map for road textures, a likelihood map for horizontal lines, and a likelihood map for three-dimensional scenes;

   wherein, the likelihood map for road colors is obtained by processing the visible image with a color cue;
   the likelihood map for road textures is obtained by processing the visible image with a texture cue;
   the likelihood map for horizontal lines is obtained by processing the visible image with a horizontal line cue; and
   the likelihood map for three-dimensional scenes is obtained by processing the visible image with a three-dimensional scene layout cue.

3. The method according to claim 2, wherein the likelihood map for road colors is specifically obtained by:

   processing the visible image based on the color cue to obtain a shadowless image, establishing a reference histogram based on the shadowless image, and traversing a whole of the shadowless image with the reference histogram based on a Babler coefficient;
   the likelihood map for road textures is specifically obtained by:

   determining a maximum direction of a road edge texture in the visible image by a filter; and
   performing a soft voting on the visible image to locate a position of a vanishing point, and obtaining the likelihood map for road textures based on the maximum direction of the road edge texture and the position of the vanishing point;

the likelihood map for horizontal lines is specifically obtained by:

determining a horizontal line based on a horizontal coordinate of the vanishing point, and obtaining the likelihood map for horizontal lines based on the horizontal line;

the likelihood map for three-dimensional scenes is specifically obtained by:

dividing the visible image into three scenes, and obtaining the likelihood map for three-dimensional scenes based on a principle of superpixel.

4. The method according to any of claims 1 to 3, wherein the road fusion map is specifically obtained by:

fusing the radar likelihood map with the visible light likelihood map based on a Bayesian fusion equation to obtain the road fusion map;

wherein the Bayesian fusion equation is as follows:

$$P(x \mid I) = \int P(x \mid L)P(L \mid I)dL \approx \sum_{i=1}^{M} w_i \, P(x \mid L_i);$$

where $P(x \mid I)$ denotes a probability of input image I finding target location x, namely a posterior probability in Bayes; $P(x \mid L)$ denotes a probability of likelihood function L finding target location x, namely a prior probability in Bayes; $P(L \mid I)$ denotes a probability of constructing likelihood function L in the input image I, namely a likelihood probability in Bayes; $P(x \mid L_i)$ denotes the radar likelihood map and the visible light likelihood map, $w_i$ denotes a weight of each likelihood map, which is 1/M, and M denotes a total number of the likelihood map.

5. A device for detecting drivable space of a road, adapted for multi-sensor and multi-cue road fusion detection, and the device comprising:

a first unit, configured for obtaining radar point cloud data by a laser radar, and processing the radar point cloud data to obtain a radar likelihood map;

a second unit, configured for capturing a visible image by an onboard camera, and performing multi-cue processing on the visible image to obtain a visible light likelihood map;

a fusion unit, configured for fusing the radar likelihood map with the visible light likelihood map to obtain a road fusion map; and

an identification unit, configured for identifying based on the road fusion map a detection result for drivable space; **characterized in that**, the first unit is specifically configured for:

obtaining the radar point cloud data by the laser radar;

performing point cloud preprocessing on the radar point cloud data with to obtain first data, the point cloud preprocessing comprising an extraction for a road edge area and a segmentation for a ground plane;

performing road point cloud detection on the first data to obtain second data, the road point cloud detection comprising a detection for a peak intensity and a window search;

extracting lane edge point cloud data from the second data; and

generating the radar likelihood map based on the lane edge point cloud data.

6. The device according to claim 5, wherein the visible light likelihood map comprises one or more from a likelihood map for road colors, a likelihood map for road textures, a likelihood map for horizontal lines, and a likelihood map for three-dimensional scenes;

the second unit is specifically configured for:

processing the visible image based on a color cue to obtain a shadowless image, establishing a reference histogram based on the shadowless image, and traversing a whole of the shadowless image with the reference histogram based on a Babler coefficient;

determining a maximum direction of a road edge texture in the visible image by a filter, performing the visible image with a soft voting to locate a position of a vanishing point, and obtaining the likelihood map for road textures based on the maximum direction of the road edge texture and the position of the vanishing point;

determining a horizontal line based on a horizontal coordinate of the vanishing point, and obtaining the likelihood map for horizontal lines based on the horizontal line; and

dividing the visible image into three scenes, and obtaining the likelihood map for three-dimensional scenes based on a principle of superpixel.

7. A computer-readable storage medium, comprising instructions which, when executed by a computer, cause the computer to carry out the method according to claim 4.

**Patentansprüche**

1. Verfahren zur Erkennung eines befahrbaren Bereichs einer Straße, angepasst für eine Straßenerkennung mit Multi-Sensor- und Multi-Cue-Fusion, wobei das Verfahren Folgendes umfasst:

Abrufen von Radar-Punktwolken-Daten mittels eines Laserradars und Verarbeiten der Radar-Punktwolken-Daten, um eine Radar-Wahrscheinlichkeitskarte zu erhalten;
Erfassen eines sichtbaren Bildes mittels einer bordeigenen Kamera und Durchführen einer Multi-Cue-Verarbeitung des sichtbaren Bildes, um eine Wahrscheinlichkeitskarte für sichtbares Licht zu erhalten;
Fusionieren der Radar-Wahrscheinlichkeitskarte mit der Wahrscheinlichkeitskarte für sichtbares Licht, um eine Straßenfusionskarte zu erhalten; und
Identifizieren eines Erkennungsergebnisses für den befahrbaren Bereich basierend auf der Straßenfusionskarte;
**dadurch gekennzeichnet, dass** die Radar-Wahrscheinlichkeitskarte insbesondere durch Folgendes erhalten wird:

Abrufen der Radar-Punktwolken-Daten mittels des Laserradars;
Durchführen einer Punktwolkenvorverarbeitung der Radar-Punktwolken-Daten, um erste Daten zu erhalten, wobei die Punktwolkenvorverarbeitung ein Extrahieren eines Straßenrandbereichs und eine Segmentierung einer Bodenebene umfasst;
Durchführen einer Straßen-Punktwolkenerkennung an den ersten Daten, um zweite Daten zu erhalten, wobei die Straßen-Punktwolkenerkennung eine Erkennung einer Spitzenintensität und eine Fenstersuche umfasst;
Extrahieren von Fahrspur-Rand-Punktwolkendaten aus den zweiten Daten; und
Erzeugen der Radar-Wahrscheinlichkeitskarte basierend auf den Fahrspur-Rand-Punktwolkendaten.

2. Verfahren nach Anspruch 1, wobei die Wahrscheinlichkeitskarte für sichtbares Licht eine oder mehrere der folgenden Karten umfasst: eine Wahrscheinlichkeitskarte für Straßenfarben, eine Wahrscheinlichkeitskarte für Straßentexturen, eine Wahrscheinlichkeitskarte für horizontale Linien und eine Wahrscheinlichkeitskarte für dreidimensionale Szenen;

wobei die Wahrscheinlichkeitskarte für Straßenfarben durch Verarbeitung des sichtbaren Bildes mit einem Farbhinweis erhalten wird;
die Wahrscheinlichkeitskarte für Straßentexturen durch Verarbeitung des sichtbaren Bildes mit einem Texturhinweis erhalten wird;
die Wahrscheinlichkeitskarte für horizontale Linien durch Verarbeitung des sichtbaren Bildes mit einem Horizontal-Linien-Hinweis erhalten wird; und
die Wahrscheinlichkeitskarte für dreidimensionale Szenen durch Verarbeitung des sichtbaren Bildes mit einem dreidimensionalen Szenenlayout-Hinweis erhalten wird.

3. Verfahren nach Anspruch 2, wobei die Wahrscheinlichkeitskarte für Straßenfarben insbesondere durch Folgendes erhalten wird:

Verarbeiten des sichtbaren Bildes basierend auf dem Farbhinweis, um ein schattenfreies Bild zu erhalten, Erstellen eines Referenzhistogramms basierend auf dem schattenfreien Bild und Durchlaufen des gesamten schattenfreien Bildes mit dem Referenzhistogramm basierend auf einem Babler-Koeffizienten;
die Wahrscheinlichkeitskarte für Straßentexturen wird insbesondere durch Folgendes erhalten:

Bestimmen einer Maximalrichtung einer Straßenrandtextur im sichtbaren Bild mittels eines Filters; und
Durchführen einer weichen Abstimmung (Soft Voting) des sichtbaren Bildes, um eine Position eines Fluchtpunkts zu lokalisieren, und Erhalten der Wahrscheinlichkeitskarte für Straßentexturen basierend auf der Maximalrichtung der Straßenrandtextur und der Position des Fluchtpunkts;
die Wahrscheinlichkeitskarte für horizontale Linien wird insbesondere durch Folgendes erhalten:

Bestimmen einer horizontalen Linie basierend auf einer horizontalen Koordinate des Fluchtpunkts und Erhalten der Wahrscheinlichkeitskarte für horizontale Linien basierend auf der horizontalen Linie;
die Wahrscheinlichkeitskarte für dreidimensionale Szenen wird insbesondere durch Folgendes erhalten:
Aufteilen des sichtbaren Bildes in drei Szenen und Erhalten der Wahrscheinlichkeitskarte für dreidimensionale Szenen basierend auf einem Superpixel-Prinzip.

4. Verfahren nach einem der Ansprüche 1 bis 3, wobei die Straßenfusionskarte insbesondere durch Folgendes erhalten wird:

Fusionieren der Radar-Wahrscheinlichkeitskarte mit der Wahrscheinlichkeitskarte für sichtbares Licht basierend auf einer Bayes'schen Fusionsgleichung, um die Straßenfusionskarte zu erhalten;
wobei die Bayes'sche Fusionsgleichung wie folgt lautet:

$$P(x \mid I) = \int P(x \mid L) P(L \mid I) dL \approx \sum_{i=1}^{M} w_i \, P(x \mid L_i);$$

wobei P(x | I) eine Wahrscheinlichkeit darstellt, dass das Eingabebild I den Zielort x findet, nämlich eine a-posteriori-Wahrscheinlichkeit in Bayes; P(x | L) eine Wahrscheinlichkeit darstellt, dass die Likelihood-Funktion L den Zielort x findet, nämlich eine a-priori-Wahrscheinlichkeit in Bayes; P(L | I) eine Wahrscheinlichkeit darstellt, die Likelihood-Funktion L im Eingabebild I zu konstruieren, nämlich eine Likelihood-Wahrscheinlichkeit in Bayes; $P(x \mid L_i)$ die Radar-Wahrscheinlichkeitskarte und die Wahrscheinlichkeitskarte für sichtbares Licht darstellt, w_i ein Gewicht jeder Wahrscheinlichkeitskarte darstellt, das 1/M beträgt, und M die Gesamtzahl der Wahrscheinlichkeitskarten darstellt.

5. Vorrichtung zur Erkennung eines befahrbaren Bereichs einer Straße, angepasst für eine Straßenfusionserkennung mit Multi-Sensor- und Multi-Cue-Technik, wobei die Vorrichtung Folgendes umfasst:

eine erste Einheit, konfiguriert zum Abrufen von Radar-Punktwolken-Daten mittels eines Laserradars und zum Verarbeiten der Radar-Punktwolken-Daten, um eine Radar-Wahrscheinlichkeitskarte zu erhalten;
eine zweite Einheit, konfiguriert zum Erfassen eines sichtbaren Bildes mittels einer bordeigenen Kamera und zum Durchführen einer Multi-Cue-Verarbeitung des sichtbaren Bildes, um eine Wahrscheinlichkeitskarte für sichtbares Licht zu erhalten;
eine Fusions-Einheit, konfiguriert zum Fusionieren der Radar-Wahrscheinlichkeitskarte mit der Wahrscheinlichkeitskarte für sichtbares Licht, um eine Straßenfusionskarte zu erhalten; und
eine Identifikationseinheit, konfiguriert zum Identifizieren eines Erkennungsergebnisses für den befahrbaren Bereich basierend auf der Straßenfusionskarte;
**dadurch gekennzeichnet, dass** die erste Einheit insbesondere konfiguriert ist für:

Abrufen der Radar-Punktwolken-Daten mittels des Laserradars;
Durchführen einer Punktwolkenvorverarbeitung der Radar-Punktwolken-Daten, um erste Daten zu erhalten, wobei die Punktwolkenvorverarbeitung ein Extrahieren eines Straßenrandbereichs und eine Segmentierung einer Bodenebene umfasst;
Durchführen einer Straßen-Punktwolkenerkennung an den ersten Daten, um zweite Daten zu erhalten, wobei die Straßen-Punktwolkenerkennung eine Erkennung einer Spitzenintensität und eine Fenstersuche umfasst;
Extrahieren von Fahrspur-Rand-Punktwolkendaten aus den zweiten Daten; und
Erzeugen der Radar-Wahrscheinlichkeitskarte basierend auf den Fahrspur-Rand-Punktwolkendaten.

6. Vorrichtung nach Anspruch 5, wobei die Wahrscheinlichkeitskarte für sichtbares Licht eine oder mehrere der folgenden Karten umfasst: eine Wahrscheinlichkeitskarte für Straßenfarben, eine Wahrscheinlichkeitskarte für Straßentexturen, eine Wahrscheinlichkeitskarte für horizontale Linien und eine Wahrscheinlichkeitskarte für dreidimensionale Szenen;
wobei die zweite Einheit insbesondere konfiguriert ist für:

Verarbeiten des sichtbaren Bildes basierend auf einem Farbhinweis, um ein schattenfreies Bild zu erhalten, Erstellen eines Referenzhistogramms basierend auf dem schattenfreien Bild und Durchlaufen des gesamten schattenfreien Bildes mit dem Referenzhistogramm basierend auf einem Babler-Koeffizienten;

Bestimmen einer Maximalrichtung einer Straßenrandtextur im sichtbaren Bild mittels eines Filters, Durchführen einer weichen Abstimmung des sichtbaren Bildes, um eine Position eines Fluchtpunkts zu lokalisieren, und Erhalten der Wahrscheinlichkeitskarte für Straßentexturen basierend auf der Maximalrichtung der Straßenrandtextur und der Position des Fluchtpunkts;

Bestimmen einer horizontalen Linie basierend auf einer horizontalen Koordinate des Fluchtpunkts und Erhalten der Wahrscheinlichkeitskarte für horizontale Linien basierend auf der horizontalen Linie; und

Aufteilen des sichtbaren Bildes in drei Szenen und Erhalten der Wahrscheinlichkeitskarte für dreidimensionale Szenen basierend auf einem Superpixel-Prinzip.

7. Computerlesbares Speichermedium, umfassend Anweisungen, die, wenn sie von einem Computer ausgeführt werden, den Computer veranlassen, das Verfahren nach Anspruch 4 durchzuführen.


## Revendications

1. Procédé de détection d'un espace routier praticable, adapté à la détection routière par fusion multi-capteurs et multi-indices, ledit procédé comprenant :

   l'obtention de données de nuage de points radar au moyen d'un lidar, et le traitement des données de nuage de points radar pour obtenir une carte de probabilité radar ;

   la capture d'une image visible au moyen d'une caméra embarquée, et le traitement multi-indices de l'image visible pour obtenir une carte de probabilité en lumière visible ;

   la fusion de la carte de probabilité radar avec la carte de probabilité en lumière visible pour obtenir une carte de fusion routière ; et

   l'identification, sur la base de la carte de fusion routière, d'un résultat de détection de l'espace praticable ; **caractérisé en ce que** la carte de probabilité radar est obtenue spécifiquement par :

   l'obtention des données de nuage de points radar au moyen du lidar ;

   la réalisation d'un prétraitement de nuage de points sur les données de nuage de points radar pour obtenir des premières données, le prétraitement de nuage de points comprenant une extraction d'une zone de bord de route et une segmentation d'un plan de sol ;

   la réalisation d'une détection de nuage de points de route sur les premières données pour obtenir des secondes données, la détection de nuage de points de route comprenant une détection d'une intensité de pic et une recherche par fenêtre ;

   l'extraction de données de nuage de points de bord de voie à partir des secondes données ; et

   la génération de la carte de probabilité radar sur la base des données de nuage de points de bord de voie.

2. Procédé selon la revendication 1, dans lequel la carte de probabilité en lumière visible comprend une ou plusieurs parmi : une carte de probabilité pour les couleurs de route, une carte de probabilité pour les textures de route, une carte de probabilité pour les lignes horizontales, et une carte de probabilité pour les scènes tridimensionnelles ;

   dans lequel la carte de probabilité pour les couleurs de route est obtenue par traitement de l'image visible avec un indice de couleur ;

   la carte de probabilité pour les textures de route est obtenue par traitement de l'image visible avec un indice de texture ;

   la carte de probabilité pour les lignes horizontales est obtenue par traitement de l'image visible avec un indice de ligne horizontale ; et

   la carte de probabilité pour les scènes tridimensionnelles est obtenue par traitement de l'image visible avec un indice de disposition de scène tridimensionnelle.

3. Procédé selon la revendication 2, dans lequel la carte de probabilité pour les couleurs de route est obtenue spécifiquement par :

   traitement de l'image visible sur la base de l'indice de couleur pour obtenir une image sans ombre, établissement d'un histogramme de référence sur la base de l'image sans ombre, et parcours de l'ensemble de l'image sans ombre avec l'histogramme de référence sur la base d'un coefficient de Babler ;
la carte de probabilité pour les textures de route est obtenue spécifiquement par :

détermination d'une direction maximale d'une texture de bord de route dans l'image visible au moyen d'un filtre ; et
réalisation d'un « soft voting » (vote souple) sur l'image visible pour localiser une position d'un point de fuite, et obtention de la carte de probabilité pour les textures de route sur la base de la direction maximale de la texture de bord de route et de la position du point de fuite ;
la carte de probabilité pour les lignes horizontales est obtenue spécifiquement par :

détermination d'une ligne horizontale sur la base d'une coordonnée horizontale du point de fuite, et obtention de la carte de probabilité pour les lignes horizontales sur la base de la ligne horizontale ;
la carte de probabilité pour les scènes tridimensionnelles est obtenue spécifiquement par :
division de l'image visible en trois scènes, et obtention de la carte de probabilité pour les scènes tridimensionnelles sur la base d'un principe de superpixel.

4.  Procédé selon l'une quelconque des revendications 1 à 3, dans lequel la carte de fusion routière est obtenue spécifiquement par :

fusion de la carte de probabilité radar avec la carte de probabilité en lumière visible sur la base d'une équation de fusion bayésienne pour obtenir la carte de fusion routière ;
dans lequel l'équation de fusion bayésienne est la suivante:

$$P(x \mid I) = \int P(x \mid L)P(L \mid I)dL \approx \sum_{i=1}^{M} w_i \, P(x \mid L_i);$$

où P(x | I) désigne une probabilité que l'image d'entrée I trouve la position cible x, à savoir une probabilité a posteriori en Bayes ; P(x | L) désigne une probabilité que la fonction de vraisemblance L trouve la position cible x, à savoir une probabilité a priori en Bayes ; P(L | I) désigne une probabilité de construire la fonction de vraisemblance L dans l'image d'entrée I, à savoir une probabilité de vraisemblance en Bayes ; P(x | $L_i$) désigne la carte de probabilité radar et la carte de probabilité en lumière visible, w_i désigne un poids de chaque carte de probabilité, qui est égal à 1/M, et M désigne un nombre total de cartes de probabilité.

5.  Dispositif de détection d'un espace routier praticable, adapté à la détection routière par fusion multi-capteurs et multi-indices, ledit dispositif comprenant :

une première unité, configurée pour obtenir des données de nuage de points radar au moyen d'un lidar, et traiter les données de nuage de points radar pour obtenir une carte de probabilité radar ;
une deuxième unité, configurée pour capturer une image visible au moyen d'une caméra embarquée, et réaliser un traitement multi-indices de l'image visible pour obtenir une carte de probabilité en lumière visible ;
une unité de fusion, configurée pour fusionner la carte de probabilité radar avec la carte de probabilité en lumière visible pour obtenir une carte de fusion routière ; et
une unité d'identification, configurée pour identifier, sur la base de la carte de fusion routière, un résultat de détection de l'espace praticable ;
**caractérisé en ce que** la première unité est spécifiquement configurée pour :

obtenir les données de nuage de points radar au moyen du lidar ;
réaliser un prétraitement de nuage de points sur les données de nuage de points radar pour obtenir des premières données, le prétraitement de nuage de points comprenant une extraction d'une zone de bord de route et une segmentation d'un plan de sol ;
réaliser une détection de nuage de points de route sur les premières données pour obtenir des secondes données, la détection de nuage de points de route comprenant une détection d'une intensité de pic et une recherche par fenêtre ;
extraire des données de nuage de points de bord de voie à partir des secondes données ; et
générer la carte de probabilité radar sur la base des données de nuage de points de bord de voie.

6.  Dispositif selon la revendication 5, dans lequel la carte de probabilité en lumière visible comprend une ou plusieurs parmi : une carte de probabilité pour les couleurs de route, une carte de probabilité pour les textures de route, une carte de probabilité pour les lignes horizontales, et une carte de probabilité pour les scènes tridimensionnelles ; dans lequel la deuxième unité est spécifiquement configurée pour :

traiter l'image visible sur la base d'un indice de couleur pour obtenir une image sans ombre, établir un histogramme de référence sur la base de l'image sans ombre, et parcourir l'ensemble de l'image sans ombre avec l'histogramme de référence sur la base d'un coefficient de Babler ;
déterminer une direction maximale d'une texture de bord de route dans l'image visible au moyen d'un filtre, réaliser un « soft voting » (vote souple) de l'image visible pour localiser une position d'un point de fuite, et obtenir la carte de probabilité pour les textures de route sur la base de la direction maximale de la texture de bord de route et de la position du point de fuite ;
déterminer une ligne horizontale sur la base d'une coordonnée horizontale du point de fuite, et obtenir la carte de probabilité pour les lignes horizontales sur la base de ladite ligne horizontale ; et
diviser l'image visible en trois scènes, et obtenir la carte de probabilité pour les scènes tridimensionnelles sur la base d'un principe de superpixel.

7. Support de stockage lisible par ordinateur, comprenant des instructions qui, lorsqu'elles sont exécutées par un ordinateur, amènent l'ordinateur à exécuter le procédé selon la revendication 4.

Obtaining radar point cloud data by a lase radar, and processing the radar point cloud data to obtain a radar likelihood map — S1

Capturing a visible image by an onboard camera, and performing the visible image with multi-cue processing to obtain a visible light likelihood map — S2

Fusing the radar likelihood map with the visible light likelihood map to obtain a road fusion map — S3

Identifying based on the road fusion map to obtain a detection result for drivable space — S4

FIG. 1

FIG. 2

Laser radar point cloud → Point cloud preprocessing → Road point cloud detection → 2D lane edge point cloud → Radar likelihood map → Bayesian fusion → Drivable space result

Establish the relationship between point cloud and image

Onboard camera → Visible image (RGB) → Color cue / Texture cue / Horizontal line cue / 3D scene layout

Luminosity invariance → Shadowless background → (Babler coefficient) → road colors (background)

Gabor filter → Texture direction → Soft voting → Vanishing point → horizontal lines

road textures

3D scenes

Likelihood map for

| Point cloud preprocessing | Road point cloud detection |
|---|---|

Laser radar point cloud → Extraction for road edge area → Segmentation for ground plane → Detection for peak intensity

Radar likelihood map ← Lane edge point cloud ← Window search

**FIG. 3**

**FIG. 4a**

**FIG. 4b**

FIG. 5

FIG. 6

FIG. 7

Original image      Shadowless image    Likelihood map for road colors

FIG. 8

Original image      Vanishing point    Likelihood map for vanishing points

FIG. 9

FIG. 10a      FIG. 10b      FIG. 10c

FIG. 11a    FIG. 11b    FIG. 11c    FIG. 11d

Detection system

Laser radar 100

Onboard camera
200

Detection device
300

## FIG. 12

Detection device 300

First unit 30

Second unit 31

Fusion unit 32

Identification unit
33

## FIG. 13

Computer equipment

102

Input device

101

Processor

105

Output device

Memory

103

104

## FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011160672 A1

- CN 112639821 A